# EUROPEAN PATENT APPLICATION

(11) **EP 4 070 945 A1**
(43) Date of publication of application: **12.10.2022**
(21) Application number: 20897412.1
(22) Date of filing: 01.12.2020
(51) Int. Cl.: B32B 3/30, B32B 15/04, C08J 5/18, H01G 4/32

(54) **METALLIZED FILM AND FILM CAPACITOR USING SAME**

(30) Priority: 02.12.2019 JP 2019217765
(71) Applicant: Kyocera Corporation, Kyoto-shi Kyoto 612-8501 (JP)
(72) Inventor: YASUHIRA, Mutsuki, Kyoto-shi, Kyoto 612-8501 (JP); NAKAO, Yoshihiro, Kyoto-shi, Kyoto 612-8501 (JP)
(74) Representative: Viering, Jentschura & Partner mbB Patent- und Rechtsanwälte
(86) International application number: PCT/JP2020/044746
(87) International publication number: WO 2021/112100

(57) **Abstract**

A metalized film includes a dielectric film having a first surface and a second surface opposite to the first surface. The dielectric film has a film thickness of 1 to 3 µm. The first surface has an arithmetic mean height. The second surface has an arithmetic mean height. The arithmetic mean heights are different. The first surface has a maximum height Sz1 satisfying the expression 100 nm < Sz1 ≤ 350 nm. The second surface has a maximum height Sz2 satisfying the expression 10 nm ≤ Sz2 ≤ 100 nm. The metalized film includes a metal film on the second surface.

## Description

### FIELD

The present disclosure relates to a metalized film and a film capacitor including the metalized film.

### BACKGROUND

A known technique is described in, for example, Patent Literature 1.

### CITATION LIST

### PATENT LITERATURE

Patent Literature 1: Japanese Patent No. 6120180

### BRIEF SUMMARY

A metalized film according to one or more aspects of the present disclosure includes a dielectric film having a first surface and a second surface opposite to the first surface. The dielectric film has a film thickness of 1 to 3 µm. The first surface has an arithmetic mean height Sa1. The second surface has an arithmetic mean height Sa2. The arithmetic mean height Sa1 and the arithmetic mean height Sa2 are different. The first surface has a maximum height Sz1 satisfying the expression 100 nm < Sz1 ≤ 350 nm. The second surface has a maximum height Sz2 satisfying the expression 10 nm ≤ Sz2 ≤ 100 nm. The metalized film includes a metal film on the second surface.

### BRIEF DESCRIPTION OF DRAWINGS

The objects, features, and advantages of the present disclosure will become more apparent from the following detailed description and the drawings.
FIG. 1 is a schematic cross-sectional view of a metalized film according to an embodiment of the present disclosure.
FIG. 2 is a schematic external perspective view of a film capacitor according to the embodiment of the present disclosure.
FIG. 3 is a schematic exploded perspective view of the film capacitor according to the embodiment of the present disclosure.

### DETAILED DESCRIPTION

A film capacitor with the structure that forms the basis of a film capacitor according to one or more embodiments of the present disclosure includes either a wound metalized film or metalized films stacked in a predetermined direction. The wound metalized film or the metalized films stacked are formed by vapor deposition of metal films on a surface of a dielectric film of, for example, a polypropylene resin.

A film capacitor that has short-circuited in a defective insulating portion of its dielectric film can self-recover the insulation in the defective insulating portion by causing a metal film portion around the defective insulating portion to diffuse using energy resulting from the short-circuiting. Such film capacitors are thus less likely to undergo dielectric breakdown and have increasingly been used in, for example, motors for driving hybrid electric vehicles (HEVs) or electric vehicles (EVs) and inverter systems for solar cell devices.

For a film capacitor manufactured using a metalized film, the withstand voltage and the element processability of the film capacitor depend on the surface properties of a dielectric film included in the metalized film. A known metalized film can lower the withstand voltage of the film capacitor or the yield in manufacturing the film capacitor.

A metalized film used in one or more embodiments of the present disclosure will now be described.

A metalized film 10 in the present embodiment includes a dielectric film 1 and a metal film 2. The dielectric film 1 has a first surface 1a and a second surface 1b opposite to the first surface 1a. The dielectric film 1 has a film thickness of 1 to 3 µm.

The dielectric film 1 is formed from an insulating resin. Examples of insulating materials for the dielectric film 1 include polypropylene (PP), polyethylene terephthalate (PET), polyphenylene sulfide (PPS), polyethylene naphthalate (PEN), polyarylate (PAR), polyphenylene ether (PPE), polyetherimide (PEI), and cycloolefin polymers (COP).

For the dielectric film 1, an arithmetic mean height Sa1 of the first surface 1a and an arithmetic mean height Sa2 of the second surface 1b are different. The arithmetic mean height Sa1 and the arithmetic mean height Sa2 may be expressed using a 10-point average.

The dielectric film 1 has a maximum height Sz1 of the first surface 1a satisfying the expression 100 nm < Sz1 ≤ 350 nm, and a maximum height Sz2 of the second surface 1b satisfying the expression 10 nm ≤ Sz2 ≤ 100 nm. More specifically, the dielectric film 1 has the different maximum heights Sz1 and Sz2, which satisfy the expression 110 nm < Sz1 + Sz2 ≤ 450 nm. The maximum heights Sz1 and Sz2 may be maximum heights of 10 points.

The metal film 2 is formed from a metal material and is formed on the second surface 1b of the dielectric film 1. Examples of the metal material for the metal film 2 include aluminum and an aluminum-based alloy. The metal film 2 has a film thickness of, for example, 10 to 30 nm.

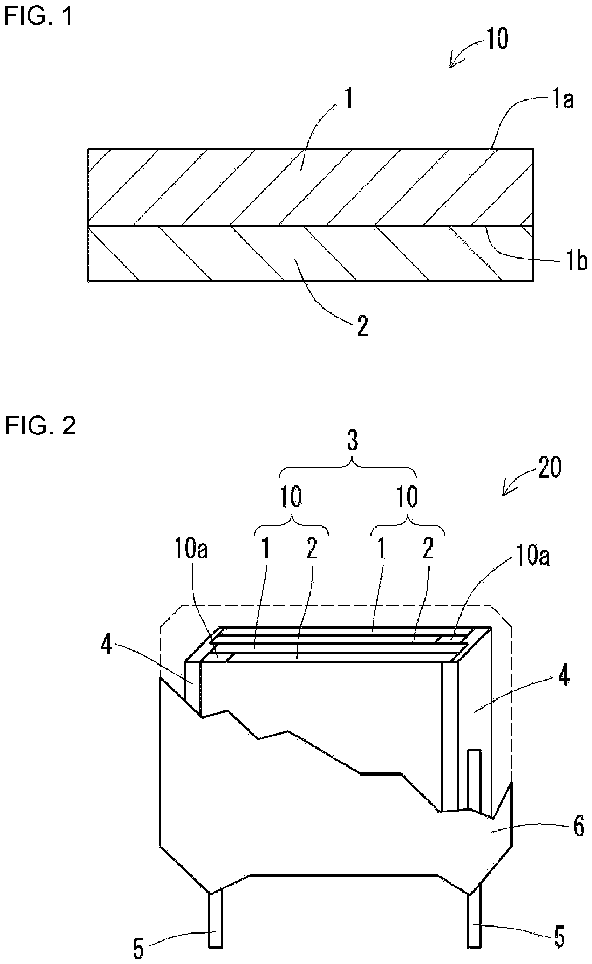

The metalized film 10 may include, at one end of the dielectric film 1 in the width direction (perpendicular to the page of FIG. 1), a metal film-free portion 10a in which the metal film 2 is not deposited and the second surface 1b of the dielectric film 1 is exposed. The metal film-free portion 10a may extend continuously in the longitudinal direction of the dielectric film (lateral direction in FIG. 1).

The metalized film 10 can be prepared as described below.

The insulating resin is first dissolved in a solvent to prepare a resin solution. Examples of the solvent include methanol, isopropanol, n-butanol, ethylene glycol, ethylene glycol monopropyl ether, methyl ethyl ketone, methyl isobutyl ketone, xylene, propylene glycol monomethyl ether, propylene glycol monomethyl ether acetate, dimethylacetamide, cyclohexane, toluene, and a mixture of two or more solvents selected from these solvents.

For example, a base formed from, for example, PET is prepared, and a first main surface (also referred to as a third surface) of the base is blasted using alumina particles. The third surface may have a maximum height Sz3 in a range satisfying 100 nm < Sz3 ≤ 350 nm.

The resin solution is then shaped into a sheet on the third surface of the base. The method for shaping may be selected as appropriate from known methods including doctor blading, die coating, and knife coating. The resin solution applied onto the third surface is dried and the solvent is volatilized. This allows the base to include the dielectric film 1 on its third surface.

The dielectric film 1 is separated from the base. The dielectric film 1 is then wound around a winding core, which is formed from resin or metal, and is collected. The metalized film 10 can be manufactured by vapor deposition of the metal film 2 onto the second surface 1b of the collected dielectric film 1.

With the method for manufacturing the metalized film 10, the dielectric film 1 formed on the third surface of the base is not wound around the winding core together with the base, but is separated from the base and wound around the winding core and is collected. This reduces indentations on the first surface 1a of the dielectric film 1 resulting from a second main surface of the base pressed against the first surface 1a.

For the metalized film 10, the first surface 1a of the dielectric film 1, on which the metal film 2 is not deposited, has fine irregularities that satisfy the expression 100 nm < Sz1 ≤ 350 nm. This reduces wrinkles that may be caused by the high smoothness of the first surface 1a. This structure further reduces adhesion between the metalized films 10 and also possible rapture of the metalized films 10 in producing the film capacitor using the wound or stacked metalized films 10. This improves the reliability of film capacitor including the metalized films 10.

For the metalized film 10, the second surface 1b of the dielectric film 1, on which the metal film 2 is deposited, satisfies the expression 10 < Sz1 ≤ 100 nm. The second surface 1b is smoother than the first surface 1a. More specifically, in the dielectric film 1, although a valley on the first surface 1a and a valley on the second surface 1b overlap as viewed in plan, the dielectric film 1 has the film thickness less likely to be reduced excessively. Thus, the film capacitor including the stacked or wound metalized films 10 is less likely to undergo dielectric breakdown under a high voltage.

The maximum height Sz1 of the first surface 2a may have a maximum profile peak height Sp1 greater than a maximum profile valley depth Sv1. This improves the smoothness of the first surface 1a and reduces wrinkles on the metalized films 10 in manufacturing film capacitors.

The film capacitor according to one or more embodiments of the present disclosure will now be described with reference to the drawings.

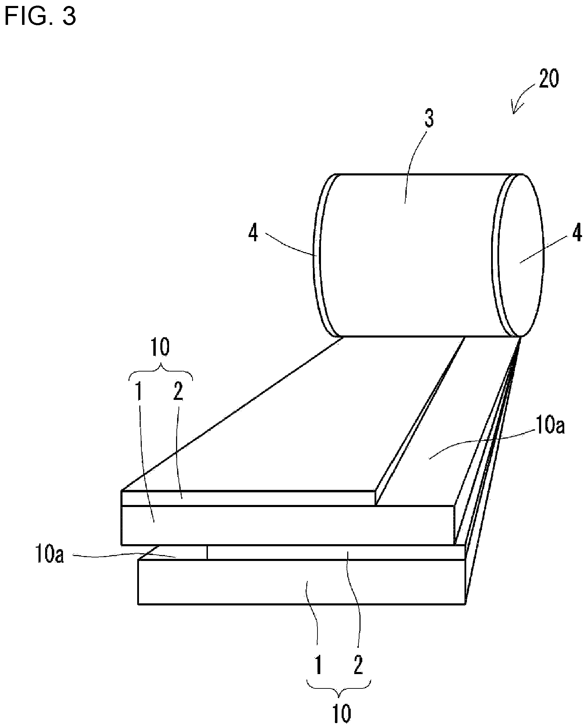

FIG. 2 is an external perspective view of the film capacitor according to an embodiment of the present disclosure. FIG. 3 is an exploded perspective view of the film capacitor according to the embodiment of the present disclosure.

A film capacitor 20 in the present embodiment includes a body 3 including the multiple metalized films 10 stacked on one another and external electrodes 4 located on the body 3.

The film capacitor 20 may include lead wires 5 that electrically connect the external electrodes 4 to an external device (not shown).

The film capacitor 20 may include an enclosure 6 that covers the body 3, the external electrodes 4, and parts of the lead wires 5. This allows the body 3, the external electrodes 4, and the parts of the lead wires 5 to be electrically insulated and protected from the external environment.

As shown in FIG. 2, for example, the film capacitor 20 includes two metalized films 10 adjacent to each other with their metal film-free portions 10a located at different ends in the width direction of the dielectric films 1 (lateral direction in FIG. 2).

The film capacitor 20 includes the metalized films 10 to improve the yield in its manufacture and the withstand voltage. The film capacitor 20 reduces adhesion between the metalized films 10 adjacent to each other and allows escape of gas under short-circuiting in the defective insulating portion, thus enhancing the self-recovery.

The film capacitor 20 may be, for example, a wound film capacitor, as shown in FIG. 3. The wound film capacitor 20 including the metalized films 10 allows escape of gas under short-circuiting in the defective insulating portion. This improves the self-recovery. Examples

The metalized film 10 will now be described in detail with reference to examples. Examples

A polyarylate resin was used as an organic resin, and toluene was used as a solvent to obtain a resin solution. The resin solution was applied onto the blasted surface of the base, followed by drying at 80 °C for an hour to remove the solvent to obtain the dielectric film 1. The obtained dielectric film 1 was separated from the base, and was wound separately around the winding core and collected. Aluminum is deposited onto the second surface 1b of the collected dielectric film 1 by vacuum deposition to obtain metalized films 10 in an example. In each working example, the combination of the organic resin and the solvent, the blasting conditions, and the drying conditions of the resin solution are changed. The resultant metalized films in examples 1 to 6 differ from each other in the surface properties of the dielectric film.

### Comparative Examples

Metalized films in comparative example 1 were prepared in the same manner as the metalized films in example 1 except that the dielectric film and the baser material were simultaneously wound around the winding core and collected. Metalized films in comparative example 2 was obtained in the same manner as in example 1 except that no blast treatment was applied to the surface of the base.

### Characteristic Assessment

In each of examples 1 to 6 and comparative examples 1 and 2, the surface was observed with a field of view of 100 µm × 100 µm using an atomic force microscope (AFM) to measure the arithmetic mean height Sa1, the maximum height Sz1, the maximum profile peak height Sp1, and the maximum profile valley depth Sv1 of the first surface 1a, and the arithmetic mean height Sa2 and the maximum height of the second surface 1b.

In each of examples 1 to 6 and comparative examples 1 and 2, the frequency of breakdown was calculated using a wide range dielectric breakdown electric field test (also referred to as a wide-range BDE test). In the wide-range BDE test, an electric field of 300 V/µm was applied between the first surface and the second surface of the dielectric film to count the locations at which dielectric breakdown has occurred per 1 m². The frequency of breakdown is the number of breakdown locations measured in the extensive BDE test expressed using the percentage of the number of breakdown locations with respect to the number of breakdown locations at the upper limit defined by the standard. The upper limit of the number of breakdown locations is the upper limit that does not cause any insulation resistance failure in the burn-in test with an electric field of 210 V/µm applied at 125 °C for 24 hours.

In each of examples 1 to 6 and comparative examples 1 and 2, many metalized films were prepared, and the burn-in test was performed to measure the percentage of the number of metalized films that underwent no insulation resistance failure (yield).

In each of examples 1 to 6 and comparative examples 1 and 2, the degree of wrinkling in the body was measured when the metalized films were stacked to form the body. In this measurement, the widths and the lengths of multiple metalized films in the body were measured in a plan view, and the percentage of deviations between the measured dimensions and the predetermined dimensions of the metalized films was calculated. The metalized film with the maximum percentage of 2% or less was determined to be acceptable (with a circle), whereas the metalized film with the maximum percentage exceeding 2% was determined to be rejected (with a cross).

**Table 1**

| | Blasting | Winding of base and film | Sz1 (nm) | Sz2 (nm) | Sz1 + Sz2 (nm) |
|---|---|---|---|---|---|
| Example 1 | Yes | Separately | 348 | 99 | 447 |
| Example 2 | Yes | Separately | 339 | 24 | 363 |
| Example 3 | Yes | Separately | 260 | 54 | 314 |
| Example 4 | Yes | Separately | 285 | 12 | 297 |
| Example 5 | Yes | Separately | 281 | 15 | 296 |
| Example 6 | Yes | Separately | 103 | 39 | 142 |
| Comparative example 1 | Yes | Simultaneously | 486 | 352 | 837 |
| Comparative example 2 | No | Separately | 73 | 3 | 76 |

**Table 2**

| | Sp1 (nm) | Sv1 (nm) | Sp1/Sv1 | Frequency of breakdown (%) | Yield (%) | Wrinkling when stacked |
|---|---|---|---|---|---|---|
| Example 1 | 194 | 154 | 1.27 | 65 | 100 | ○ |
| Example 2 | 176 | 163 | 1.08 | 47 | 100 | ○ |
| Example 3 | 137 | 122 | 1.12 | 52 | 100 | ○ |
| Example 4 | 152 | 134 | 1.13 | 54 | 100 | ○ |
| Example 5 | 144 | 138 | 1.04 | 35 | 100 | ○ |
| Example 6 | 66 | 37 | 1.78 | 22 | 100 | ○ |
| Comparative example 1 | 243 | 243 | 1.00 | 120 | 20 | ○ |
| Comparative example 2 | 51 | 22 | 2.32 | 19 | 100 | × |

Tables 1 and 2 show the results of the characteristic assessment. In examples 1 to 6, the sum of the maximum heights Sz1 and Sz2 was 450 nm or less, and the frequency of breakdown was less than 100%. The frequency of breakdown decreased as the sum of the maximum heights Sz1 and Sz2 decreased, and the frequency of breakdown decreased as the ratio Sp1/Sv1 increased.

The metalized films in comparative example 1 have greater maximum heights Sz1 and Sz2 than the metalized films in examples 1 to 6, indicating that the frequency of breakdown is high in comparative example 1. This may result from, for example, indentations on the dielectric film resulting from the base pressed against the dielectric film when the base and the dielectric film are wound simultaneously.

The metalized films in comparative example 2 each have the second surface 1b with a less maximum height Sz2 than the metalized films in examples 1 to 6. In comparative example 2, the degree of wrinkling is high when the metalized films were stacked to form the body. This may result from the second surface of the dielectric film formed on the base without being blasted, thus with reduced smoothness.

The present disclosure may be implemented in the following forms.

A metalized film according to one or more embodiments of the present disclosure includes a dielectric film having a first surface and a second surface opposite to the first surface. The dielectric film has a film thickness of 1 to 3 µm. The first surface has an arithmetic mean height Sa1. The second surface has an arithmetic mean height Sa2. The arithmetic mean height Sa1 and the arithmetic mean height Sa2 are different. The first surface has a maximum height Sz1 satisfying the expression 100 nm < Sz1 ≤ 350 nm. The second surface has a maximum height Sz2 satisfying the expression 10 nm ≤ Sz2 ≤ 100 nm. The metalized film includes a metal film on the second surface.

The metalized film according to one or more embodiments of the present disclosure can improve the withstand voltage of the film capacitor and the yield in manufacturing film capacitors.

Although embodiments of the present disclosure have been described in detail, the present disclosure is not limited to the embodiments described above, and may be changed or modified in various manners without departing from the spirit and scope of the present disclosure.

### Reference Signs List

- 1: dielectric film
- 1a: first surface
- 1b: second surface
- 2: metal film
- 2a: first surface
- 3: body
- 4: external electrode
- 5: lead wire
- 6: enclosure
- 10: metalized film
- 10a: metal film-free portion
- 20: film capacitor

## Claims

1. A metalized film, comprising:
a dielectric film having a first surface and a second surface opposite to the first surface, the dielectric film having a film thickness of 1 to 3 µm, the first surface having an arithmetic mean height Sa1, the second surface having an arithmetic mean height Sa2, the arithmetic mean height Sa1 and the arithmetic mean height Sa2 being different, the first surface having a maximum height Sz1 satisfying 100 nm < Sz1 ≤ 350 nm, the second surface having a maximum height Sz2 satisfying 10 nm ≤ Sz2 ≤ 100 nm; and
a metal film on the second surface.

2. The metalized film according to claim 1, wherein
the maximum height Sz1 has a maximum profile peak height Sp1 greater than a maximum profile valley depth Sv1.

3. A film capacitor, comprising:
a body including at least one metalized film according to claim 1 or claim 2, the at least one metalized film being stacked or wound; and
an external electrode located on the body.
